# EUROPÄISCHE PATENTSCHRIFT

(11) **EP 3 099 951 B1**
(45) Veröffentlichungstag und Bekanntmachung des Hinweises auf die Patenterteilung: **10.04.2019**
(21) Anmeldenummer: 14806531.1
(22) Anmeldetag: 22.10.2014
(51) Int. Cl.: F16C 17/02, F16C 33/24, F16C 33/20, F16C 33/12, F16C 33/10, F16C 33/04

(54) **AERODYNAMISCHES LUFTLAGER UND VERFAHREN ZU DESSEN HERSTELLUNG**
AERODYNAMIC AIR BEARING AND METHOD FOR PRODUCING SAME
PALIER À AIR AÉRODYNAMIQUE ET PROCÉDÉ POUR LE PRODUIRE

(30) Priorität: 29.01.2014 DE 102014201563
(43) Veröffentlichungstag der Anmeldung: 07.12.2016
(73) Patentinhaber: Schaeffler Technologies AG & Co. KG, 91074 Herzogenaurach (DE)
(72) Erfinder: BRAUN, Wolfgang, 97493 Garstadt (DE); KURSAWE, Serge, 91080 Uttenreuth (DE); BAKOLAS, Vasilios, 91074 Herzogenaurach (DE)
(86) Internationale Anmeldenummer: PCT/DE2014/200587
(87) Internationale Veröffentlichungsnummer: WO 2015/113532

(56) Entgegenhaltungen:
- JP-B1- 5 314 181
- US-A1- 2006 288 579
- US-A1- 2007 003 693

## Beschreibung

Die vorliegende Erfindung betrifft ein aerodynamisches Luftlager. Im Besonderen besitzt das aerodynamische Luftlager ein Lagergehäuse zur Lagerung einer Welle. Im Lagergehäuse ist mindestens eine Wellfolie fixiert. Zwischen der mindestens einen Wellfolie und der zu lagernden Welle liegt eine Deckfolie, wobei die der Welle zugewandte Fläche der Deckfolie eine Beschichtung trägt und somit die Lauffläche der Welle bildet.

Ferner betrifft die Erfindung ein Verfahren zur Herstellung eines aerodynamischen Luftlagers.

### Hintergrund der Erfindung

Aerodynamische Luftlager werden bevorzugt in geringfügig belastenden Anwendungen bei hoher Drehzahl eingesetzt (wie z. B. Kompressoren, Gasturbinen, etc.). Eine spezielle Bauart der aerodynamischen Luftlager sind Folienlager. Die Elastizität einer gewählten Folie zwischen der tragenden Folie und dem Gehäuse ermöglicht eine gute Passung der tragenden Folie zur Wellenoberfläche. Luftfilmdicken im Bereich von 5µm erfordern geringe Toleranzen über dem Lagerquerschnitt. Problematisch sind Start- und Stoppvorgänge, da es dabei zu Festkörperkontakt zwischen der tragenden Folie und der zu lagernden Welle kommt.

In den U.S.-Patenten US 5,902,049, US 5,988,885 und US 6,158,893 wird ein Folienlager offenbart. Die Welle liegt einer inneren Oberfläche einer Folie gegenüber, die auf einer Wellfolie des Lagergehäuses aufliegt. Die der Welle gegenüberliegende Oberfläche der Folie ist mit einer Beschichtung versehen. Bei der Beschichtung handelt es sich um eine Trockenfilmbeschichtung, die der Welle gegenüberliegt. Dabei handelt es sich um eine weiche Beschichtung, wie z. B. eine Wolfram-Disulfid, NiCr und Mo-Disulfid basierte Trockenschmierstoffbeschichtungen mit einer niedrigen Härte. Diese Beschichtungen zeichnen sich durch eine geringe Fressneigung, den niedrigen Reibungskoeffizienten, der guten Anbindung an die tragende Folie und der hohen Temperaturstabilität aus.

Die deutsche Patentanmeldung DE 10 2011 115 249 A1 offenbart eine Luftlagerbeschichtung. Das Lager umfasst ein Folienlager, das einen mit einem Lagergehäuse verbundenen Lagerring aufweist. Auf dessen Innenseite ist die zu lagernde Welle angeordnet. Zwischen dem Lagerring und der Welle sind wenigstens eine an den Lagerring angrenzende Tragfolie und eine an die Welle angrenzende Deckfolie vorgesehen. Zwischen der Deckfolie und der Welle ist eine Gleitschicht vorgesehen. Die Gleitschicht ist auf der Oberfläche der Welle aufgebracht.

Die US 2007/003693 A1 beschreibt ein Beschichtungsmaterial umfassend 20 - 40 Gew.-% Cr₂O₃, 40 - 60 Gew.-% Bindemittel, 10 - 20 Gew.-% WS₂ und 10 - 20 Gew.-% Ag. Das Bindemittel ist ein metallisches Bindemittel und umfasst Nickel, Chrom und gegebenenfalls Aluminium. Die Beschichtung wird für ein Luftlager zur Beschichtung einer Folie eingesetzt, die in Kontakt zu einer Welle steht.

Die US 2006/288579 A1 offenbart ein Verfahren zur Herstellung eines Gleitlagers mit einer Laufbahn, die Vertiefungen aufweist. In die Vertiefungen ist ein Material durch stromloses Plattieren, Galvanisieren oder Elektrophorese eingebracht.

Der Erfindung liegt die Aufgabe zugrunde, ein aerodynamisches Luftlager zu schaffen, das mit einer verschleißfesten Lauffläche und niedriger Rauheit hergestellt werden kann. Ferner soll das erfindungsgemäße aerodynamische Luftlager kostengünstig sein.

Die obige Aufgabe wird durch ein aerodynamisches Luftlager gelöst, das die Merkmale des Anspruchs 1 umfasst.

Eine weitere Aufgabe der Erfindung ist, ein Verfahren zu schaffen, mit dem es möglich ist, auf kostengünstige Art und Weise ein aerodynamisches Luftlager herzustellen, das eine verschleißfeste Lauffläche und eine niedrige Rauheit aufweist.

Die obige Aufgabe wird durch ein Verfahren gelöst, das die Merkmale des Anspruchs 4 besitzt.

Das erfindungsgemäße aerodynamische Luftlager ist mit einem Lagergehäuse zur Lagerung einer Welle versehen. Im Lagergehäuse ist mindestens eine Wellfolie fixiert. Die mindestens eine Wellfolie kann dabei in Umfangsrichtung und/oder in axialer Richtung des Luftlagers segmentiert sein. Zwischen der Wellfolie und der Welle ist eine Deckfolie vorgesehen. Die der Welle zugewandte Fläche der Deckfolie trägt eine Beschichtung, die letztendlich die Lauffläche für die Welle bildet. Hinzu kommt, dass die der Welle gegenüberliegende Lauffläche eine durch eine partielle Beschichtung ausgebildete Strukturierung besitzt. Die Deckfolie ist hartstoffbeschichtet und diese Beschichtung bildet die Lauffläche für die Welle. Die in der Beschichtung ausgebildete Strukturierung kann mittels einer Drucktechnik vorgezeichnet (maskiert) werden. Die zur Reibungsminimierung und zum Verschleißschutz mittels eines PVD/PACVD-Verfahrens aufgebrachte Beschichtung haftet nur an den nicht bedruckten, bzw. maskierten Bereichen. Die typische Strukturtiefe in der Beschichtung entspricht somit der Beschichtungsdicke und liegt mit 2µm bis 5µm im für aerodynamische Luftlager typischen Bereich.

Die Deckfolie kann als Metallfolie ausgebildet sein.

Wie bereits erwähnt, ist die Beschichtung auf der Deckfolie (Metallfolie) aus Hartstoff. Die Beschichtung ist erfindungsgemäß eine kohlenstoffbasierte, nitridische, karbidische, karbonnitridische oder oxidische Hartstoffschicht.

Des Weiteren ist es denkbar, dass die Beschichtung aus einer Kombination von zwei oder mehreren der vorgenannten Beschichtungstypen sein kann. Besonders gut geeignet sind hier die Triondur® Schichtsysteme aus dem Hause Schaeffler.

Die aus der partiellen Beschichtung resultierende Strukturierung besitzt eine Tiefe, die gleich der Dicke der Beschichtung auf der Deckfolie, bzw. der Metallfolie ist. Die Beschichtung auf der Deckfolie kann eine Dicke von 0,5µm bis 15µm aufweisen.

Das erfindungsgemäße Verfahren zur Herstellung eines aerodynamischen Luftlagers zeichnet sich dadurch aus, dass zunächst eine Strukturierung an definierten Positionen auf einer Fläche einer Deckfolie des Luftlagers vorgezeichnet wird. Anschließend erfolgt das Beschichten derjenigen Flächen der Deckfolie, die die vorgezeichnete Strukturierung trägt, mit der Beschichtung, wobei die Beschichtung mittels eines PVD/PACVD-Verfahrens gebildet wird. Danach wird die Beschichtung von den definierten Positionen der Fläche der Deckfolie entfernt. Dadurch wird die Strukturierung mit einer Tiefe ausgebildet, die gleich der Dicke der Beschichtung ist. Letztendlich erfolgt das Einrollen der beschichteten und strukturierten Deckfolie auf die mindestens eine im Lagergehäuse fixierten Wellfolie. Die so beschichtete und strukturierte Fläche der Deckfolie ist einer zu lagernden Welle zugewandt und bildet für die zu lagernde Fläche die Lauffläche.

Das Vorzeichnen der Strukturierung in der Fläche der Deckfolie erfolgt mittels einer Drucktechnik. An der Maskierung haftet die Beschichtung nur sehr unzureichend, so dass nach dem Beschichtungsprozess die Beschichtung an den definierten Positionen, an denen die Strukturierung ausgebildet werden soll, wieder entfernt werden kann. Das Entfernen der Beschichtung kann mit einem mechanischen und/oder chemischen Prozess erfolgen. Für den mechanischen Prozess wird bevorzugt ein Bürstprozeß verwendet. Die Deckfolie kann als Metallfolie ausgebildet sein und besitzt eine Dicke von 70µm bis 150µm.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: eine schematische Schnittdarstellung eines radialen Luftlagers gemäß dem Stand der Technik;
- Fig. 2: eine perspektivische, teilweise Schnittansicht eines erfindungsgemäßen aerodynamischen Luftlagers;
- Fig. 3A: eine Schnittansicht durch einen Teil der Lauffläche mit vorgezeichneter Strukturierung und aufgebrachter Beschichtung; und
- Fig. 3B: eine Schnittansicht der Deckfolie, bei der die Strukturierung ausgebildet ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellte Ausführungsform stellt lediglich ein Beispiel dar, wie das erfindungsgemäße Wälzlager ausgeführt sein kann, bzw. wie das erfindungsgemäße Verfahren zur Herstellung eines aerodynamischen Wälzlagers ausgebildet ist. Die dargestellten Ausführungsbeispiele stellen somit keine Beschränkung der Erfindung dar.

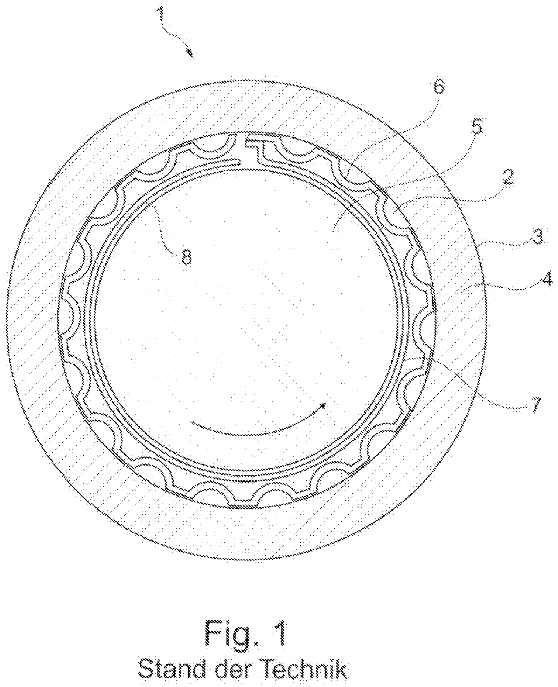

**Figur 1** zeigt ein Luftlager 1 gemäß dem Stand der Technik. Das Luftlager 1 verfügt über ein axiales Folienlager 2, das im Wesentlichen über ein Lagergehäuse 3, sowie einen an dem Lagergehäuse 3 angebrachten Lagerring 4 verfügt. Im Innern des Lagerrings 4 ist eine drehbar gelagerte Welle 5 angeordnet. Zwischen der Welle 5 und dem Lagerring 4 ist eine Wellfolie 6 vorgesehen. Des Weiteren ist angrenzend an die Welle 5 eine Deckfolie 7 vorgesehen, die bei Stillstand der Welle 5, zumindest abschnittsweise, eine Berührungsfläche mit der Welle 5 aufweist. Um den Verschleiß während der Start- sowie Abschaltphase zu minimieren, ist zwischen der Welle 5 und der Deckfolie 7 eine Gleitschicht 8 vorgesehen. Eine derartige Gleitschicht 8 stellt sicher, dass Verschleißerscheinungen im Bereich zwischen der Welle 5 und der Deckfolie 7 zumindest minimiert werden.

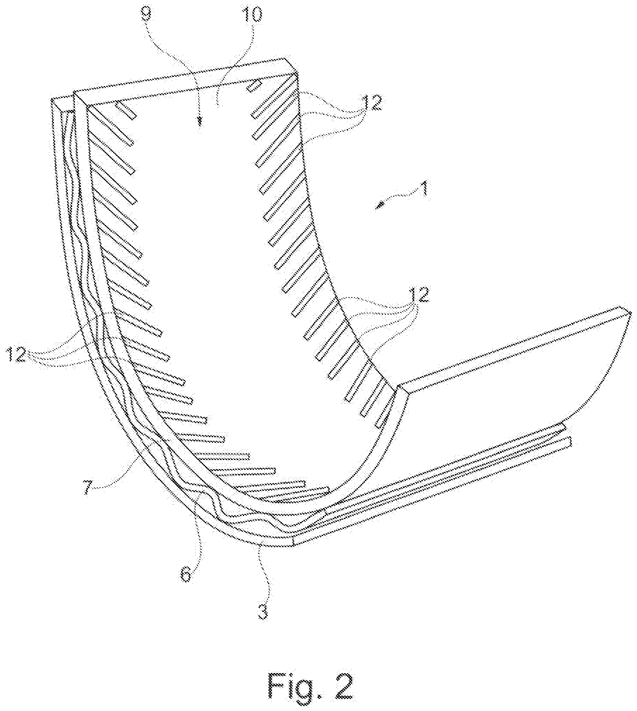

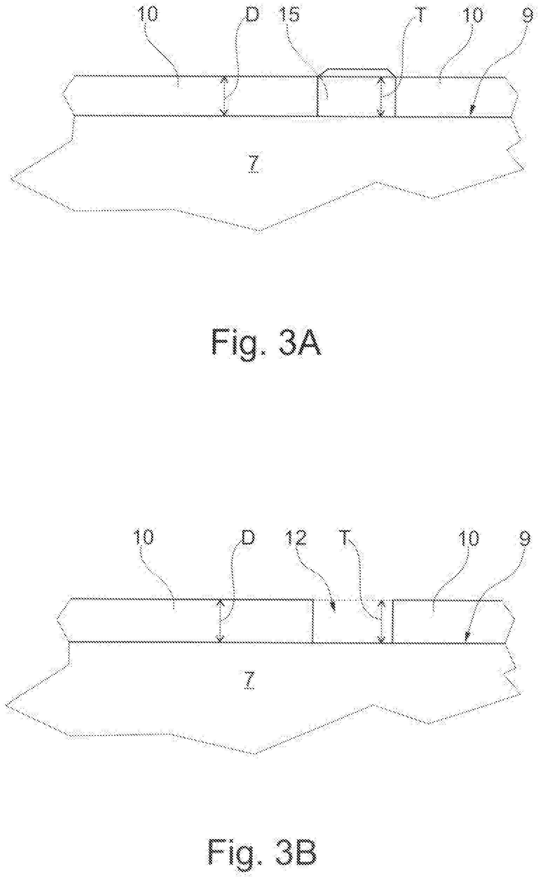

**Figur. 2** zeigt eine perspektivische Schnittansicht eines aerodynamischen Luftlagers 1, bei dem zur Übersicht halber die zu lagernde Welle 5 weggelassen worden ist. Das Lagergehäuse 3 trägt ebenfalls eine Wellfolie 6. Auf der Wellfolie 6 liegt eine Deckfolie 7 auf. Die Deckfolie 7 kann als Metallfolie ausgebildet sein und eine Dicke von 70µm bis 150µm aufweisen. Die Fläche 9 der Deckfolie 7 ist zum Beschichten ausgebildet und liegt nach dem Beschichten der Welle (hier nicht dargestellt) gegenüber. In der Beschichtung 10, welche aus dem Hartstoff besteht, ist eine Strukturierung 12 ausgebildet. Die Strukturierung 12 sowie die Beschichtung 10 werden zu einem Zeitpunkt ausgebildet, bevor die Deckfolie 7 in das aerodynamische Luftlager 1 eingerollt wird. Diejenigen Positionen für die Strukturierung in der Fläche 9 der Deckfolie 7, welche der zu lagernden Welle gegenüberliegt, werden vorgezeichnet. Das Vorzeichnen kann beispielsweise mit einer Drucktechnik erfolgen. Die Beschichtung 10 wird letztendlich auf die Fläche 9 der Deckfolie 7 aufgebracht, die die Maskierung (siehe Fig. 3A) für die Strukturierung 12 trägt. Nachdem die Beschichtung 10 aufgebracht worden ist, muss die Beschichtung 10 an denjenigen Stellen bzw. Positionen der Fläche 9 der Deckfolie 10 befreit werden, an denen die Strukturierung 12 vorliegen soll. Wie bereits oben erwähnt, haftet die Beschichtung 10 nicht bzw. ungenügend an den maskierten Positionen bzw. Stellen auf der Fläche 9 der Deckfolie 7. Somit kann nach dem Beschichtungsprozess an denjenigen Stellen bzw. Positionen die Beschichtung 10 entfernt werden. Das mechanische Entfernen der Beschichtung 10 kann bevorzugt mit einem Bürstprozeß durchgeführt werden. Wie bereits oben erwähnt, ist das Entfernen der Beschichtung 10 nicht alleine auf den Bürstprozeß beschränkt.

**Figur. 3A** und **3B** zeigen eine Schnittansicht durch die Deckfolie 7, die eine Beschichtung 10 bzw. Maskierung 15 trägt. In Fig. 3A ist an einer ausgezeichneten Position eine Maskierung 15 für die nach dem Beschichtungsprozess resultierende Strukturierung 12 aufgebracht. Von der Fläche 9 der Deckfolie 7 wird die Beschichtung 10 an denjenigen Stellen, an denen sich die Maskierung 15 befunden hat, entfernt. Somit resultiert dann in der Fläche 9 der Deckfolie 7 die erforderliche bzw. gewünschte Strukturierung 12. Als Resultat erhält man eine Strukturierung 12 mit einer Tiefe T, welche gleich der Dicke D der Beschichtung 10 entspricht. Die Strukturierung 12 hat den Vorteil, dass sich dadurch die Tragfähigkeit der Lauffläche steigern lässt. Ebenso lässt sich durch die Strukturierung 12 die Anlaufzeit verkürzen, die erforderlich ist, um in die Aerodynamik des Luftlagers zu kommen.

### Bezugszeichenliste

- 1: Luftlager
- 2: Folienlager
- 3: Lagergehäuse
- 4: Lagerring
- 5: Welle
- 6: Wellfolie
- 7: Deckfolie
- 8: Gleitschicht
- 9: Fläche zum Beschichten
- 10: Beschichtung
- 12: Strukturierung
- 15: Maskierung
- D: Dicke der Beschichtung
- T: Tiefe der Strukturierung

## Patentansprüche

1. Aerodynamisches Luftlager (1) mit einem Lagergehäuse (3) zur Lagerung einer Welle (5), mindestens einer im Lagergehäuse (3) fixierten Wellfolie (6) und einer zwischen der mindestens einen Wellfolie (6) und Welle (5) liegenden Deckfolie (7), wobei eine der Welle (5) zugewandte Fläche (9) der Deckfolie (7) eine Beschichtung (10) trägt und die Lauffläche für die Welle (5) bildet, wobei eine Strukturierung (12) durch eine partielle Beschichtung (10) der Deckfolie (7) ausgebildet ist, wobei die Strukturierung (12) eine Tiefe (T) aufweist, die gleich der Dicke (D) der Beschichtung (10) ist, wobei die Beschichtung (10) der Deckfolie (7) aus Hartstoff gebildet ist, wobei die Beschichtung (10) eine kohlenstoffbasierte, nitridische, karbidische, karbonnitridische oder oxidische Hartstoffschicht ist oder aus einer beliebigen Kombination von zwei oder mehreren der genannten Hartstoffschichten gebildete Hartstoffschicht ist, und wobei die Beschichtung (10) mittels eines PVD/PACVD-Verfahrens gebildet ist.

2. Aerodynamisches Luftlager (1) nach Anspruch 1, wobei die Deckfolie (7) eine Metallfolie ist.

3. Aerodynamisches Luftlager (1) nach Anspruch 1 oder 2, wobei die Beschichtung (10) eine Dicke im Bereich von 0,5µm bis 15µm aufweist.

4. Verfahren zur Herstellung eines aerodynamischen Luftlagers (1) nach einem der Ansprüche 1 bis 3, **gekennzeichnet durch** die folgenden Schritte:
- Vorzeichnen einer Strukturierung (12) an definierten Positionen auf einer Fläche (9) einer Deckfolie (7) des Luftlagers (1);
- Beschichten derjenigen Fläche (9) der Deckfolie (7), die die vorgezeichnete Strukturierung (12) trägt, mit der Beschichtung (10), wobei die Beschichtung (10) mittels eines PVD/PACVD-Verfahrens gebildet wird;
- Entfernen der Beschichtung (10) von den definierten Positionen der Fläche (9) der Deckfolie (7), so dass die Strukturierung (12) mit einer Tiefe (T) ausgebildet wird, die gleich der Dicke (D) der Beschichtung (10) ist; und
- Einrollen der beschichteten und strukturierten Deckfolie (7) auf mindestens eine im Lagergehäuse (3) fixierten Wellfolie (6), so dass die beschichtete Fläche (9) der Deckfolie (7) einer zu lagernden Welle zugewandt ist.

5. Verfahren nach Anspruch 4, wobei das Vorzeichnen einer Strukturierung (12) mittels einer Drucktechnik durchgeführt wird.

6. Verfahren nach Anspruch 4, wobei das Entfernen der Beschichtung (10) von den definierten Positionen der Fläche der Deckfolie (7) mit einem mechanischen und/oder chemischen Prozess durchgeführt wird.

7. Verfahren nach einem der Ansprüche 4 bis 6, wobei die Deckfolie (7) eine Metallfolie mit einer Dicke von 70µm bis 150µm ist.

## Claims

1. Aerodynamic air bearing (1) with a bearing housing (3) for mounting a shaft (5), at least one corrugated foil (6) fixed in the bearing housing (3) and a cover foil (7) lying between the at least one corrugated foil (6) and the shaft (5), wherein a surface (9) of the cover foil (7) that is facing the shaft (5) bears a coating (10) and forms the running surface for the shaft (5), wherein a structuring (12) is formed by a partial coating (10) of the cover foil (7), wherein the structuring (12) has a depth (T), which is equal to the thickness (D) of the coating (10), wherein the coating (10) of the cover foil (7) is formed from hard material, wherein the coating (10) is a carbon-based, nitridic, carbidic, carbononitridic or oxidic hard material layer or a hard material layer formed from any desired combination of two or more of the hard material layers mentioned, and wherein the coating (10) is formed by means of a PVD/PACVD process.

2. Aerodynamic air bearing (1) according to Claim 1, wherein the cover foil (7) is a metal foil.

3. Aerodynamic air bearing (1) according to Claim 1 or 2, wherein the coating (10) has a thickness in the range from 0.5 µm to 15 µm.

4. Method for producing an aerodynamic air bearing (1) according to one of Claims 1 to 3, **characterized by** the following steps:
- marking out a structuring (12) at defined positions on a surface (9) of a cover foil (7) of the air bearing (1);
- coating the surface (9) of the cover foil (7) that bears the marked-out structuring (12) with the coating (10), wherein the coating (10) is formed by means of a PVD/PACVD process;
- removing the coating (10) from the defined positions of the surface (9) of the outer foil (7), so that the structuring (12) is formed with a depth (T) that is equal to the thickness (D) of the coating (10); and
- rolling in the coated and structured cover foil (7) on at least one corrugated foil (6) fixed in the bearing housing (3), so that the coated surface (9) of the cover foil (7) is facing a shaft to be mounted.

5. Method according to Claim 4, wherein the marking out of a structuring (12) is carried out by means of a printing technique.

6. Method according to Claim 4, wherein the removing of the coating (10) from the defined positions of the surface of the cover foil (7) is carried out by a mechanical and/or chemical process.

7. Method according to one of Claims 4 to 6, wherein the cover foil (7) is a metal foil with a thickness of 70 µm to 150 µm.

## Revendications

1. Palier à air aérodynamique (1) comprenant un logement de palier (3) pour le support sur palier d'un arbre (5), au moins une feuille ondulée (6) fixée dans le logement de palier (3) et une feuille de recouvrement (7) située entre l'au moins une feuille ondulée (6) et l'arbre (5), une surface (9), tournée vers l'arbre (5), de la feuille de recouvrement (7) portant un revêtement (10) et formant la surface de roulement pour l'arbre (5), une structuration (12) étant réalisée par un revêtement partiel (10) de la feuille de recouvrement (7), la structuration (12) présentant une profondeur (T) qui est égale à l'épaisseur (D) du revêtement (10), le revêtement (10) de la feuille de recouvrement (7) étant formé de matière dure, le revêtement (10) étant une couche de matière dure à base de carbone, de nitrure, de carbure, de nitrure de carbone ou d'oxyde, ou étant une couche de matière dure formée d'une combinaison quelconque de deux ou de plus de deux desdites couches de matière dure, et le revêtement (10) étant formé par un procédé PVD/PACVD.

2. Palier à air aérodynamique (1) selon la revendication 1, dans lequel la feuille de recouvrement (7) est une feuille métallique.

3. Palier à air aérodynamique (1) selon la revendication 1 ou 2, dans lequel le revêtement (10) présente une épaisseur dans la plage de 0,5 µm à 15 µm.

4. Procédé de fabrication d'un palier à air aérodynamique (1) selon l'une quelconque des revendications 1 à 3, **caractérisé par** les étapes suivantes :
- marquage d'une structuration (12) en des positions définies sur une surface (9) d'une feuille de recouvrement (7) du palier à air (1) ;
- revêtement de la surface (9) de la feuille de recouvrement (7) qui porte la structuration marquée (12), avec le revêtement (10), le revêtement (10) étant formé au moyen d'un procédé PVD/PACVD ;
- enlèvement du revêtement (10) des positions définies de la surface (9) de la feuille de recouvrement (7) de telle sorte que la structuration (12) soit réalisée avec une profondeur (T) qui est égale à l'épaisseur (D) du revêtement (10) ; et
- enroulement de la feuille de recouvrement (7) revêtue et structurée sur au moins une feuille ondulée (6) fixée dans le logement de palier (3) de telle sorte que la surface revêtue (9) de la feuille de recouvrement (7) soit tournée vers un arbre à supporter.

5. Procédé selon la revendication 4, dans lequel le marquage d'une structuration (12) est effectué au moyen d'une technique d'impression.

6. Procédé selon la revendication 4, dans lequel l'enlèvement du revêtement (10) des positions définies de la surface de la feuille de recouvrement (7) est effectué avec un processus mécanique et/ou chimique.

7. Procédé selon l'une quelconque des revendications 4 à 6, dans lequel la feuille de recouvrement (7) est une feuille métallique ayant une épaisseur de 70 µm à 150 µm.
